# EUROPÄISCHE PATENTSCHRIFT

(11) **EP 2 134 526 B1**
(45) Veröffentlichungstag und Bekanntmachung des Hinweises auf die Patenterteilung: **26.10.2011**
(21) Anmeldenummer: 08735014.6
(22) Anmeldetag: 04.04.2008
(51) Int. Cl.: B29C 45/14

(54) **Verfahren und Vorrichtung zur Herstellung eines Verbundbauteils**
Method and device for producing a composite component
Procédé et dispositif de fabrication d'un élément composite

(30) Priorität: 13.04.2007 DE 102007017415
(43) Veröffentlichungstag der Anmeldung: 23.12.2009
(73) Patentinhaber: Daimler AG, 70327 Stuttgart (DE)
(72) Erfinder: BECHTOLD, Michael, 71297 Mönsheim (DE); DUDZIAK, Kai-Uwe, 21435 Stelle (DE); JUNGE, Dieter, 21720 Grünendeich (DE); SCHRÖDER, Matthias, 35428 Langgöns/Espa (DE); LANGWALDT, Silke, 21224 Rosengarten (DE); MAIER, Hans-Peter, 72202 Nagold (DE); NOTTBUSCH, Hans-Peter, 22143 Hamburg (DE); AUGUSTIN, Helmut, 21149 Hamburg (DE); FALKE, Jürgen, 25462 Rellingen (DE); SCHULT, Jens, 21435 Stelle (DE); REESE, Eckhard, 21641 Apensen (DE)
(74) Vertreter: JENSEN & SON
(86) Internationale Anmeldenummer: PCT/EP2008/002682
(87) Internationale Veröffentlichungsnummer: WO 2008/125232

(56) Entgegenhaltungen:
- EP-A- 0 894 548
- EP-A- 1 380 493
- EP-A- 1 607 312
- EP-A- 1 749 639
- EP-A- 1 849 686
- EP-A- 1 884 451
- WO-A-02/02292
- WO-A-2005/002825
- WO-A-2008/043432
- WO-A-2008/067901
- DE-A1- 10 014 332
- DE-A1- 10 326 768
- GB-A- 2 350 312
- US-A- 5 942 169
- US-A1- 2004 072 006

## Beschreibung

Innenhochdruck umformwenkzeugelement und ein spritzgießwerk zeugelement beinhaltet>

Die Erfindung betrifft ein Verfahren zur Herstellung eines Verbundbauteils aus einem Hohlprofil und zumindest einem spritzgusselement, wobei ein Hohlprofil mittels fluidischen Innenhochdrucks umgeformt und mit einem Spritzgussmaterial unter Bildung des Spritzgusselements umspritzt wird und eine Vorrichtung zur Herstellung eines Verbundbauteils aus einem Hohlprofil und zumindest einem Spritzgusselement, mit einem Kombinationswerkzeug, das ein Innenhochdruck umformwerkzeugelement und ein Spritzgießwerkzeugelement beinhaltet..

Ein derartiges Verfahren bzw. eine derartige Vorrichtung ist aus der DE 100 14 332 C2 bekannt. Dort wird ein Hohlprofil beschrieben, das in ein Kombinationswerkzeug, das ein Innenhochdruckumformwerkzeugelement und ein Spritzgießwerkzeugelement beinhaltet, eingelegt und befüllt wird, wonach anschließend das Hohlprofil durch die Schließbewegung des Kombinationswerkzeuges ausgeformt wird. Hiernach wird ein Spritzgießwerkzeugelement aktiviert, wobei die erforderlichen Kavitäten durch Kern- und Schieberbewegungen erzeugt werden. Das fertig geformte Hohlprofil wird nun entsprechend der Form der Kavitäten umspritzt, wobei durch das Aushärten des Kunststoffes sich ein Spritzgießelement ausbildet. Das Verbundbauteil ist nun fertig gestaltet und kann dem Kombinationswerkzeug nach einem Öffnungshub entnommen werden. Eine derartige Erzeugung der Kavitäten durch Kernzüge oder Schieberbewegungen ist mit erheblichem Aufwand verbunden, was auch einen zügigen Herstellungsablauf behindert. Wenn die Schieberbewegungen bei geschlossenem Kombinationswerkzeug ausgeführt werden, können zudem nur Kavitäten sehr geringer Komplexität zum Einsatz gelangen, wodurch die Gestaltungsmöglicfikeiten des Spritzgusselementes erheblich eingeschränkt sind. Werden die Kerne bei geöffnetem IHU-Werkzeug entfernt, bzw. die Schieberbewegungen in diesem Zustand ausgeführt, ist dies mit einer Verlängerung der Herstellungszeit verbunden, was die Herstellung des Verbundbauteils unwirtschaftlich macht.

Weiterhin ist aus der WO 2005/002825 A1 die Herstellung eines Verbundbauteils bekannt, bei der ein Hohlprofil mit einem Kunststoff umspritzt wird. Zur Vermeidung von Einfallstellen, die durch den Spritzgießdruck am metallischen Hohlprofil entstehen können, wird innerhalb des Hohlprofils ein Stützdruck mittels einer inkompressiblen Flüssigkeit ausgeübt.

Darüber hinaus ist der GB 2 350 312 A ein Verfahren und eine zugehörige Vorrichtung zur Herstellung eines Verbundbauteils entnehmbar, bei dem eine sich verfestigende Flüssigkeit, beispielsweise aus geschmolzenem Kunststoff unter Druck in ein Rohr eingeleitet wird. Unter diesem Druck weitet sich das Rohr auf und legt sich an die Gravur des Werkzeugs an. Das Werkzeug weist des Weiteren einen Anschluss auf, über den flüssiger Kunststoff in einen Spalt zwischen dem Werkzeug und dem noch nicht aufgeweiteten Rohr eingeleitet werden kann um dieses äußerlich zu beschichten.

Das Dokument W02008/043432 A1 ist Stand der Technik gemäß Artikel 54(3) EPÜ. Es offenbart ein Verfahren und eine entsprechende Vorrichtung zur Herstellung eines Verbundteils. Unter dem Einfluss eines hochgespannten Druckfluids weitet sich ein Hohlprofilrohling auf und legt sich konturgetreu an die Gravur eines Kombinationswerkzeugs an. Im Anschluss an die Umformung wird das Hohlprofil durch das in das Innenhochdruckumformwerkzeug integrierte Spritzgießwerkzeug mit Kunststoff umspritzt.

Der Erfindung liegt die Aufgabe zugrunde, das bekannte Verfahren dahingehend weiterzubilden, dass die Herstellung auch eines komplexer ausgebildeten Verbundbauteils in einfacher Weise ermöglicht wird. Dementsprechend soll zudem eine Vorrichtung zur Durchführung des Verfahrens angegeben werden.

Die Aufgabe ist erfindungsgemäß durch die Merkmale des Patentanspruches 1 hinsichtlich des Verfahrens und durch die Merkmale des Patentanspruches 2 hinsichtlich der Vorrichtung gelöst.

Aufgrund dessen, dass erfindungsgemäß das Hohlprofil in einem geschlossenen Kombinationswerkzeug, welches ein Innenhochdruckumformwerkzeugelement und ein Spritzgießwerkzeugelement beinhaltet und sich daher zum Innenhochdruckumformen und lokalen Spritzgießen eignet, mittels Innenhochdruck aufgeweitet wird, bevor es umspritzt wird, kann eine zusätzliche Prozessüberwachung, die darüber wacht, dass beim Schließen des Kombinationswerkzeugs kein Hohlprofilmateriel zwischen die beiden Gesenkteile (Oberwerkzeug und Unterwerkzeug oder linke und rechte Werkzeughälfte) des Kombinationswerkzeugs gerät, entfallen, was den apparativen Aufwand erheblich verringert. Damit verbunden wird die Gefahr einer Prozessstörung ausgeschlossen, so dass diesbezüglich die Prozesssicherheit in der Herstellung des Verbundbauteils gewährleistet ist. Das prinzipielle Problem des Zusetzens der Spritzgießkanäle durch mit Innenhochdruck aufgeweitetes Hohlprofilmaterial, das dadurch erwächst, wenn entgegen dem bekannten Stand der Technik aufgrund der technischen und prozessualen Vereinfachung keine Abdeckung der Spritzgießkavitäten während der Innenhochdruckumformung vorhanden ist, wird erfindungsgemäß dadurch gelöst, dass das Hohlprofil an der Werkzeuggravur im Bereich der zu umspritzenden Stellen unter Freihaltung der in die Werkzeuggravur mündenden Austritte der Spritzgießkanäle nur lokal angepresst wird. Die damit verbundene partielle Anlage des Hohlprofils wird durch eine geeignete Geometrie der Werkzeuggravur des Kombinationswerkzeuges bewerkstelligt, so dass bei einem Umformdruck, der geringer ist als der Druck, mit dem das Hohlprofil exakt die Kontur der Gravur im Bereich der zu umspritzenden Stellen nachbilden würde, also als der Kalibrierdruck ist, nur eine partielle Anlage des Hohlprofils an der Gravur erreicht wird, da die Geometrie der Gravur eine gänzliche Anlage bei dem vorliegenden Umformdruck nicht zulässt. Dabei wird ein Freiraum zwischen dem Hohlprofil und der Gravur geschaffen, in den dann im Anschluss an die Umformung, mit der die lokale bzw. partielle Anlage des Hohlprofils erreicht wird, Spritzgießmaterial eingeleitet werden kann. Da der Umformdruck kleiner ist, kann die besagte lokale Anlage bzw. die Ausbildung eines Freiraums durch eine geeignete Wahl der Radien, in der Regel kleine Radien, an der Gravur in einfacher Weise erzielt werden. Die Radien sind jedoch so zu gestalten, dass ein Einschneiden in das Hohlprofil infolge der Anpressung an der Gravur vermieden wird, was ein Bersten des Hohlprofils zur Folge hätte. Das heißt, die Kanten an der Gravurkontur, die den Freiraum begrenzen, sollten abgerundet sein. Aufgrund dessen, dass die Kavität bzw. der Freiraum zum Spritzgießen unabhängig von der Abdeckung des Standes der Technik gestaltet werden kann, erhält man eine größere gestalterische Freiheit bei der Ausbildung der zu erzeugenden Spritzgießelemente, wodurch sich insgesamt kompliziertere und komplexere Strukturen bei der Ausbildung des Verbundbauteils relativ einfach erzielen lassen. Da dies lediglich durch eine geeignete Ausbildung der Gravur erreicht wird und keine zusätzliche Schieberbewegungen oder Kernzüge erforderlich sind, kann der Herstellungsprozess ungehindert und verfahrensökonomisch schneller abfolgen. Hierbei ist natürlich auch von Vorteil, dass das Spritzgießwerkzeugelement und das IHU-Werkzeugelement eine gemeinsame Gravur mit einem Aufweitbereich aufweisen, wodurch das Hohlprofil während des gesamten Herstellungsprozesses in einem einzigen Werkzeug verbleiben kann ohne in irgendeiner Weise bewegt zu werden, was nicht nur Herstellungszeit kosten würde sondern auch mit zusätzlichen unerwünschten Fertigungstoleranzen verbunden wäre. Des Weiteren erstreckt sich die Umspritzung über den gesamten Aufweitbereich bzw, über den mittels Innenhochdruck ausgebauchten Abschnitt des Hohlprofils, was einen Formschluss des später ausgehärteten Spritzgießelements mit dem Hohlprofil in axialer Richtung des Hohlprofils zur Folge hat, was dem Spritzgießelement einen unverlierbaren Halt auf dem Hohlprofil gibt.

Bei der erfindungsgemäßen Vorrichtung weist die Gravur im Aufweitbereich zumindest einen stufigen Absatz auf, an dessen Kanten das aufgeweitete Hohlprofil anliegt und der mit dem Hohlprofil den Freiraum begrenzt. Mit der Einrichtung von Absätzen, in deren Absatzflächen ein Austritt ausgebildet ist, in den jeweils die einzelnen Spritzgießkanäle ausmünden, können variantenreich mittels fluidischen Innenhochdrucks Ausformungen höheren Umformgrades erzielt werden ohne in diesem Aufweitbereich auf eine Umspritzung verzichten zu müssen.

In einer bevorzugten Weiterbildung der erfindungsgemäßen Vorrichtung nach Anspruch 3 weist die Gravur im Aufweitbereich zumindest eine Ringnut auf, die eine Breite von höchstens 8mm besitzt. Die Ringnutbreite hängt dabei von der Wanddicke und dem Werkstoff des verwendeten Hohlprofils ab. Hierdurch lässt sich ein Verbundbauteil herstellen, das mit minimaler Umformung des Hohlprofils auskommt und trotzdem einen ausreichenden axialen Halt des Spritzgießelements auf dem Hohlprofil durch Formschluss erhält. Dies ist für den Einsatz von Hohlprofilmaterialien vorteilhaft, die eine geringe Bruchdehnung aufweisen. Die Ausbildung von Ringnuten stellt nur einen geringen Eingriff in die Gravur dar, wobei diese sehr einfach zu erzeugen sind. Die Nutweite wird so eng gewählt, dass bei der Aufweitung des Hohlprofils Hohlprofilmaterial nur in geringem Masse in die Nuten vorwölben kann, so dass am Hohlprofil nur geringfügige Ausbauchungen entstehen, die jedoch mit dem Spritzgießelement eine formschlüssige feste Verbindung eingehen. Die in die Ringnuten führenden Spritzgießkanäle können hierdurch vom Hohlprofilmaterial nicht zugesetzt und damit blockiert werden. Das Hohlprofil legt sich in dem sich über die axial voneinander beabstandeten Ringnuten erstreckenden Aufweitbereich an die Gravur zwischen den Nuten und somit lokal an. Bei der Ausbildung nur einer Ringnut beschränkt sich die Anlage des Hohlprofils im Aufweitbereich lediglich auf die die Nut begrenzenden Kanten. Somit ist dabei ein Verbundbauteil herstellbar, dessen Hohlprofil im umspritzten Bereich durch die Umformung nur in geringem Maße ausgebaucht ist und dessen Spritzgusselement sich über den Ausbauchbereich erstreckt und in Form einer ringförmigen filigranen Lamelle ausgebildet ist.

In einer bevorzugten Weiterbildung der erfindungsgemäßen Vorrichtung nach Anspruch 4 weist die Gravur mehrere Ringnuten aufweist, wobei in der Gravur zumindest eine Nut ausgebildet ist, deren Verlauf den der Ringnuten schneidet. Durch diese einfach auszuführende Maßnahme der Gravurgestaltung kann ein Verbundbauteil hergestellt werden, das mehrere lamellenförmige Spritzgusselemente aufweist, die durch Stege miteinander verbunden sind. Hierdurch wird den einzelnen filigranen Spritzgusselementen eine höhere Stabilität und Steifigkeit verliehen. Diese Längsnuten können geradlinig oder kurvig verlaufen, was zu einer höheren Vielfalt an Gestaltungsmöglichkeiten der Stege führt.

Nachfolgend ist die Erfindung anhand zweier in den Zeichnungen dargestellter Ausführungsbeispiele näher erläutert.

Dabei zeigen:
- Fig. 1: in einem seitlichen Längsschnitt abschnittsweise eine Gravur einer erfindungsgemäßen Vorrichtung mit treppenförmigem Aufweitbereich mit eingelegtem Hohlprofil vor der Umformung,
- Fig. 2: in einem seitlichen Längsschnitt abschnittsweise die Gravur von Fig. 1 nach der Umformung des Hohlprofils,
- Fig. 3: in einer perspektivischen Darstellung eine Draufsicht auf eine Gravur eines Unterwerkzeugs einer erfindungsgemäßen Vorrichtung mit einem unteren Abschnitt äquidistant angeordneter Ringnuten,
- Fig. 4: in einem seitlichen Längsschnitt abschnittsweise die Gravur aus Fig. 4 mit eingelegtem Hohlprofil vor der Umformung,
- Fig. 5: in einem seitlichen Längsschnitt abschnittsweise die Gravur aus Fig. 4 und 5 nach der Umformung des Hohlprofils,
- Fig. 6: seitlichen Längsschnitt abschnittsweise die Gravur aus den Fig. 4-6 während des Spritzvorgangs.

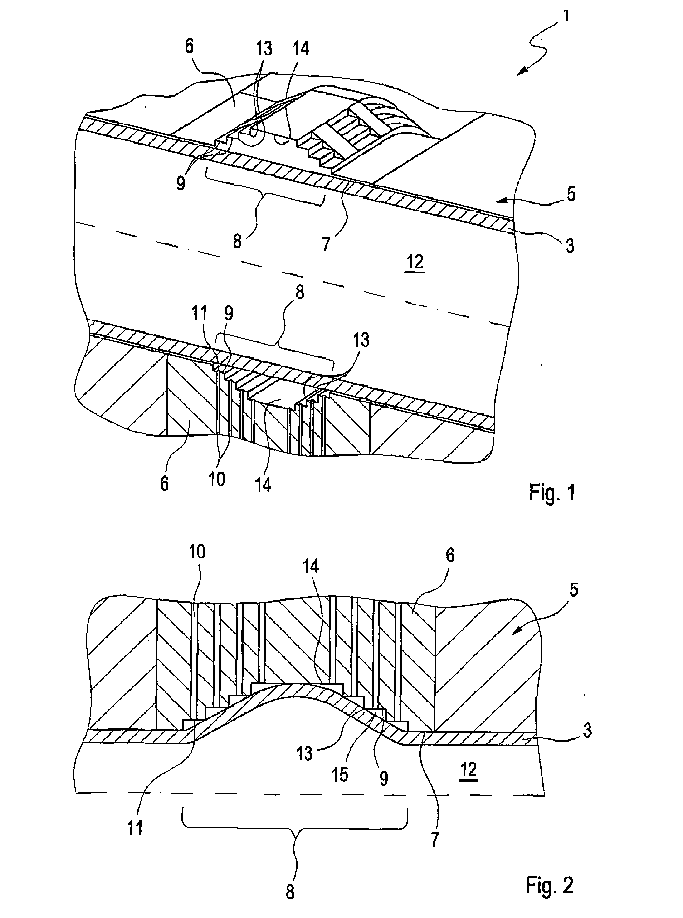

In Fig. 1 ist eine Vorrichtung 1 zur Herstellung eines Verbundbauteils aus einem Hohlprofil 3 und einem Spritzgusselement 4 dargestellt, wobei die Vorrichtung 1 ein Kombinationswerkzeug bildet, das ein IHU-Werkzeugelement 5 und ein in dieses integrierte Spritzgießwerkzeug 6 beinhaltet. Die beiden Werkzeugelemente 5 und 6 weisen eine gemeinsame Gravur 7 mit einem durch eine Ausnehmung gebildeten Aufweitbereich 8 auf, wobei die Gravur 7 dort mehrere stufige Absätze 9 besitzt, die zusammen die Form einer aufsteigenden und wieder absteigenden Treppe bilden. Das Spritzgießwerkzeug 6 beinhaltet mehrere Spritzgießkanäle 10, die jeweils in einem Austritt 11 der Absatzflächen ausmünden.

Gemäß Fig. 1 wird nach dem erfindungsgemäßen Verfahren das Hohlprofil 3 in die Gravur 7 der von den Werkzeugelementen 5 und 6 gebildeten Vorrichtung 1 eingelegt. Anschließend wird die Vorrichtung 1 geschlossen und das Hohlprofil 3 durch zwei Axialstempel an den Enden hochdruckdicht abgedichtet. Über zumindest einen dieser Axialstempel, der dafür einen Axialkanal aufweist, wird ein Druckfluid in das Hohlprofilinnere 12 eingeleitet und durch eine an den Axialkanal angeschlossene Fluidhochdruckerzeugungsanlage gespannt, bis ein Umformdruck erreicht ist, der kleiner als ein Kalibrierdruck ist. Das Hohlprofil 3 weitet sich nun unter dem Innenhochdruck auf und gemäß Fig. 2 als Ausbauchung in den Aufweitbereich 8 hinein, wobei sich das Hohlprofil 3 lokal an den Kanten 13 der das Hohlprofil 3 umlaufenden Absätze 9 und dem Plateau 14 des untersten Absatzes anlegt. Die Umformung ist hiermit beendet. In diesem Zustand begrenzt das aufgeweitete Hohlprofil 3 mit den Absätzen 9 Freiräume 15, wodurch die in die Werkzeuggravur 7 mündenden Austritte 11 der Spritzgießkanäle 10 freigehalten werden. Die Freiräume 15 bezeichnen dabei den Bereich der zu umspritzenden Stellen des Hohlprofils 3. Hiernach wird der Innenhochdruck beispielsweise auf einen Druck abgesenkt, der kleiner als ein Umformdruck ist und so groß ist, dass das Hohlprofil von der Stabilität und der Konturtreue her dem Spritzgießdruck des nachfolgenden Spritzgießvorganges schadlos standhält. Nun wird Spritzgießmaterial über die Kanäle 10 in die Freiräume 15 eingeleitet, wodurch diese ausgefüllt werden. Nach Erstarren des Spritzgießmaterials unter Bildung des das ausgebauchte Hohlprofil 3 umfassenden und sich über den Ausbauchbereich erstreckenden Spritzgießelementes 4, das nun gegengleich zur Kontur der Gravur 7 ausgebildet ist, wird der Innenhochdruck entspannt und das Druckfluid aus dem fertiggestellten Verbundbauteil herausgeleitet. Die Axialstempel werden aus der Abdichtposition zurückgefahren, so dass die Vorrichtung 1 geöffnet und das Verbundbauteil dieser entnommen werden kann.

Eine Abwandlung stellt ein Hohlprofil 3 dar, das anstatt einer Ausbauchung eine Einbeulung oder Verjüngung trägt. Diese Verjüngung wird durch eine Auswölbung der Gravur des Kombinationswerkzeuges im Schließvorgang erzeugt, die umlaufend oder nur radial lokal an der Gravur ausgebildet sein kann. Die Auswölbung der Gravur ist so konturiert gestaltet, dass sie dem formnegativen Abbild der Gravur 7 des vorangegangenen Ausführungsbeispiels entspricht. Nach der mechanischen Einbeulung des Hohlprofils wird dieses dort mittels Innenhochdruck aufgeweitet, bis das Hohlprofil an den Kanten des treppenartigen Abschnitts der Gravur anliegt. Die Spritzgießkanäle sind im Übrigen in ähnlicher Weise angeordnet wie im obigen Ausführungsbeispiel, wobei das Verfahrensprinzip zur Bildung des Verbundbauteils - abgesehen von der Einbeulung - übereinstimmt. Nach dem Spritzgießen erstreckt sich das erzeugte Spritzgusselement über den Verjüngungsbereich und ist der Form einer absteigenden und wieder aufsteigenden Treppe nachempfunden.

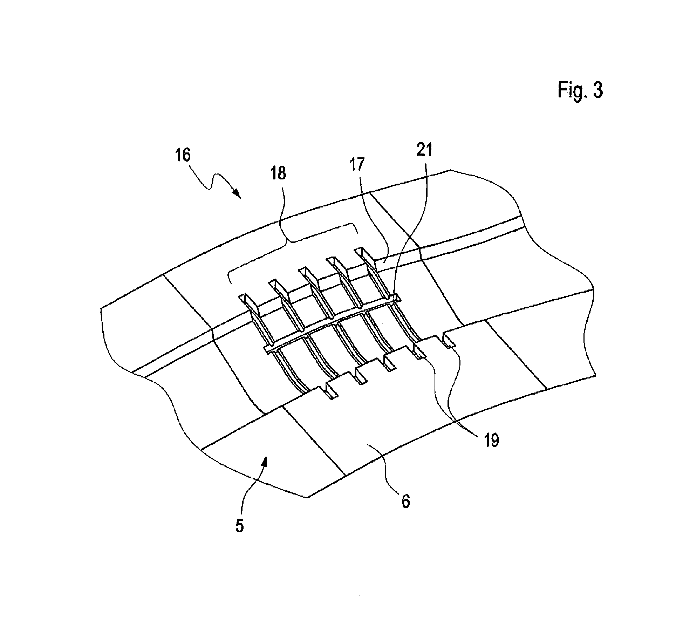

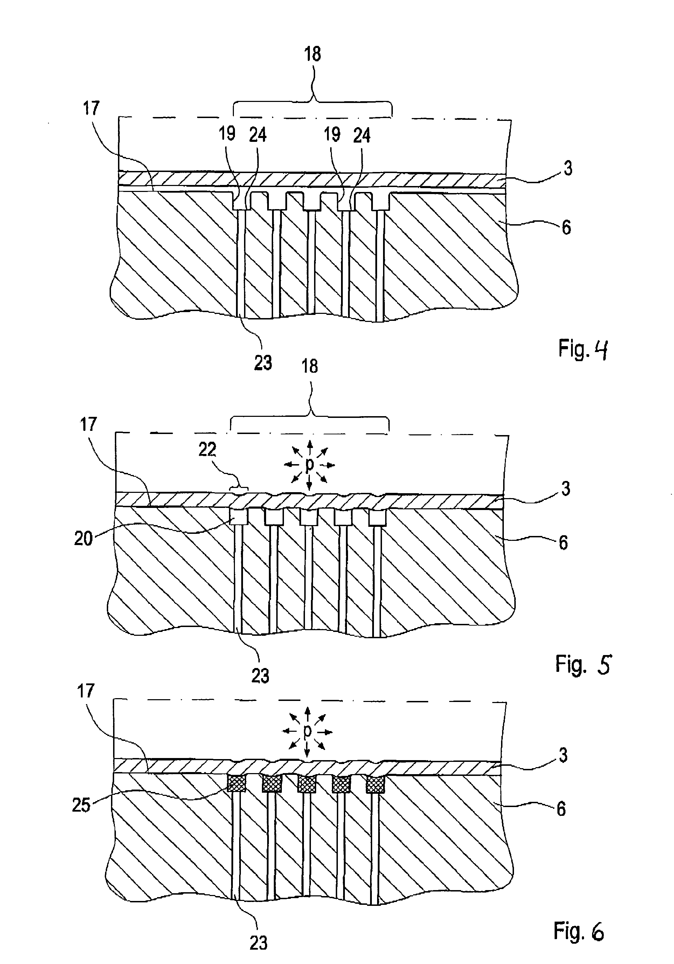

In einer weiteren Variante der Erfindung nach den Figuren 3-6 besitzt die erfindungsgemäße Vorrichtung 16 eine Gravur 17, die im Aufweitbereich 18 mehrere Ringnuten 19 aufweist, deren Breite höchstens 8mm, vorzugsweise 3mm besitzt und die jeweils mit dem aufgeweiteten an der Gravur 17 anliegenden Hohlprofil 3 den Freiraum 20 bilden. In die Gravur 17 ist zumindest eine sich längs erstreckende Verbindungsnut 21 ausgebildet, deren Verlauf den der Ringnuten 19 schneidet (Fig. 3). Zur Herstellung des Verbundbauteils 22 wird das unverformte Hohlprofil 3 in die Gravur 17 eingelegt, wonach sich die Vorrichtung 16 schließt und das Hohlprofil 3 durch die oben genannten Stempel abgedichtet wird (Fig. 4). Danach wird nach Einleitung des Druckfluid und dessen Spannung ein fluidischer Innenhochdruck p erzeugt, der das Hohlprofil 3 aufweitet und in die Ringnuten 19 sowie in die Nut 21 zu einem geringen Maße ausbaucht. Das Hohlprofil 3 liegt im Anschluss an die Ringnuten 98 und damit an den jeweiligen Ausbauchbereich 22 zwischen den Ringnuten 19 lokal an der Gravur 17 an (Fig. 5). Schließlich wird in Analogie zum vorangegangenen Ausführungsbeispiel der Druck im Hohlprofil 3 auf einen Stützdruck eingestellt, beispielsweise abgesenkt und im Anschluss daran über Spritzgießkanäle 23, die an dem jeweiligen Nutgrund 24 der Ringnuten 19 und der Verbindungsnut 21 ausmünden, Spritzgießmaterial in den jeweiligen Freiraum 20 eingeleitet, das sich hinsichtlich der Ringnuten 19 um das Hohlprofil 3 herum gleichmäßig verteilt. Bei Erstarrung des Spritzgießmaterials ergeben sich Spritzgießelemente 25, die in Form von ringförmigen Lamellen ausgebildet sind. Die Lamellen sind miteinander entsprechend des in der Nut 21 erstarrten Spritzgießmaterials durch einen Steg einstückig verbunden. Es ist durchaus denkbar, dass mehrere Verbindungnuten 21 in der Gravur 17 eingebracht sind, die so verlaufen sollten, dass nach Ausbildung der Stege das Verbundbauteil ohne weiteres aus der Gravur 17 entnommen werden kann. Beispielsweise können diese in der Trennfuge des IHU-Werkzeuges verlaufen. Das fertig gestellte Verbundbauteil kann nach Entspannung des Druckes, Zurückfahren der Axialstempel und Öffnung der Vorrichtung 16 dieser entnommen werden.

## Patentansprüche

1. Verfahren zur Herstellung eines Verbundbauteils aus einem Hohlprofil (3) und zumindest einem Spritzgusselement (25), wobei ein Hohlprofil (3) mittels fluidischen Innenhochdrucks umgeformt und mit einem Spritzgussmaterial unter Bildung des Spritzgusselements (25) umspritzt wird,
**dadurch gekennzeichnet, dass** das Hohlprofil (3) in einem geschlossenen Kombinationswerkzeug, bestehend aus einem Innenhochdruckumformwerkzeugelement (5) und einem Spritzgießwerkzeugelement (6) mittels Innenhochdruck aufgeweitet wird, bevor es umspritzt wird, wobei das Hohlprofil (3) an der Werkzeuggravur (7,17) im Bereich der zu umspritzenden Stelle unter Freihaltung der in die Werkzeuggravur (7,17) mündenden Austritts (11) des Spritzgießkanals (10,23) nur lokal angepresst wird.

2. Vorrichtung zur Herstellung eines Verbundbauteils aus einem Hohlprofil (3) und zumindest einem Spritzgusselement (25), mit einem Kombinationswerkzeug, das ein Innenhochdruckumformwerkzeugelement (5) und ein Spritzgießwerkzeugelement (6) beinhaltet,
wobei die beiden Werkzeugelemente (5,6) eine
gemeinsame Werkzeuggravur (7,17) mit einem Aufweitbereich (8.18) aufweisen, wobei die Werkzeuggravur (7,17) im Aufweitbereich (8) zumindest einen stufigen Absatz (9) aufweist,
und wobei das Spritzgießwerkzeug (6) mehrere Spritzgießkanäle (10) beinhaltet, die jeweils in einem Austritt (11) der Absatzflächen ausmünden.

3. Vorrichtung nach Anspruch 2,
**dadurch gekennzeichnet, dass** die Werkzeugravur (7,17) im Aufweitbereich (18) zumindest eine Ringnut (19) aufweist, die höchstens eine Breite von 8mm besitzt.

4. Vorrichtung nach Anspruch 3,
**dadurch gekennzeichnet, dass** die Werkzeugravur (7,17) mehrere Ringnuten (19) aufweist und dass in der Werkzeugravur (7,17) zumindest eine Verbindungsnut (21) ausgebildet ist, deren Verlauf den der Ringnuten (19) schneidet.

## Claims

**1.** Method for producing a composite component from a hollow section (3) and at least one injection-moulded element (25), wherein a hollow section (3) is shaped by means of internal high fluid pressure and coated by an injection moulding material while forming the injection-moulded element (25), **characterised in that** the hollow section (3) is expanded in a closed combination tool, comprising a
hydroforming die element (5) and a
injection moulding die element (6) by means of internal high pressure before being coated, wherein the hollow section (3) is only locally forced against the die cavity (7, 17) in the region of the area to be coated while leaving free the outlet (11) of the injection moulding channel (10, 23) which terminates into the die cavity (7, 17).

**2.** Device for producing a composite component from a hollow section (3) and at least one injection-moulded element (25), comprising a combination tool comprising a
hydroforming die element (5) and a
injection moulding die element (6),
wherein the two die elements (5, 6) have a common die cavity (7, 17) with an expanding region (8, 18), the die cavity (7, 17) having at least one stepped shoulder (9) in the expanding region (8),
and wherein the injection moulding die (6) contains a plurality of injection moulding channels (10), each of which terminates in an outlet (11) of the shoulder surfaces.

**2.** Device according to claim 2,
**characterised in that** the die cavity (7, 17) has at least one annular groove (19) with a maximum width of 8 mm in the expanding region (18).

**4.** Device according to claim 3,
**characterised in that** the die cavity (7, 17) has several annular grooves (19), and **in that** in the die cavity (7, 17) there is formed at least one connecting groove (21), the course of which intersects that of the annular grooves (19).

## Revendications

1. Procédé de fabrication d'un élément composite constitué d'un profil creux (3) et d'au moins un élément de moulage par injection (25), un profil creux (3) étant transformé à l'aide d'une pression élevée interne fluide et extrudé avec un matériau de moulage par injection par formation de l'élément de moulage par injection (25), **caractérisé en ce que** le profil creux (3) est étiré, avant extrusion, dans un outil combiné fermé constitué d'un élément de déformation à l'aide d'une pression élevée interne (5) et d'un élément (6) d'outil de moulage par injection, au moyen d'une pression élevée interne, le profil creux (3) sur l'estampe de moule (7, 17) n'est comprimé que localement au niveau de l'endroit à extruder, la sortie (11) débouchant dans l'estampe de moule (7, 17) du canal de moulage par injection (10, 23) restant dégagée.

2. Dispositif pour la fabrication d'un élément composite constitué d'un profil creux (3) et d'au moins un élément de moulage par injection (25), doté d'un outil combiné qui contient un élément de déformation (5) à l'aide d'une pression élevée interne et un élément (6) d'outil de moulage par injection, les deux éléments d'outil (5, 6) présentant une estampe de moule commune (7, 17) pourvue d'une zone d'élargissement, l'estampe de moule (7, 17) présentant dans la zone d'élargissement (8) au moins une section étagée (9), l'élément (6) d'outil de moulage par injection comprenant plusieurs canaux de moulage par injection (10) qui débouchent chacun dans une sortie (11) des surfaces étagées.

3. Dispositif selon la revendication 2, **caractérisé en ce que** l'estampe de moule (7, 17) présente dans la zone d'élargissement (18) au moins une rainure annulaire (19) dont la largeur est d'au maximum 8 mm.

4. Dispositif selon la revendication 3, **caractérisé en ce que** l'estampe de moule (7, 17) présente plusieurs rainures annulaires (19) et **en ce que** dans l'estampe de moule (7, 17) au moins une rainure de liaison (21) est formée dont la trajectoire coupe celle des rainures annulaires (19).
